# EUROPEAN PATENT SPECIFICATION

(11) **EP 0 979 712 B1**
(45) Date of publication and mention of the grant of the patent: **28.07.2004**
(21) Application number: 98115031.1
(22) Date of filing: 11.08.1998
(51) Int. Cl.: B27M 3/04, B27G 11/00, B27B 5/06

(54) **Gluing machine for splines**
Vorrichtung zur Beleimung von Holzleisten
Dispositif de collage pour lames de bois

(43) Date of publication of application: 16.02.2000
(73) Proprietor: A. COSTA SPA, 36010 Zane' (VI) (IT)
(72) Inventor: Franchin, Pier, Luigi, 31100 Treviso (TV) (IT)
(74) Representative: Bonini, Ercole

(56) References cited:
- DE-U- 29 513 007
- GB-A- 704 327
- US-A- 2 288 585

## Description

The invention concerns a gluing machine for splines suitable for generally realising compound structures of splines and particularly suitable for the realisation of little planks for parquet.

It is known that the little planks which are used for the realisation of parquet are formed of a spline of valuable material glued on a support which can be formed of one or more base splines and of not valuable wood.

For the realisation of such little planks one of the known method is that of arranging the base splines on a bearing plane and of overlapping to one of them a spline of valuable material after having spreaded the surfaces in contact with an adhesive substance. The little planks so prepared are put under the action of a press till the gluing is realised.

Another method includes the gluing of a plurality of splines of valuable wood on a underlying spline of not valuable wood or of another material, which presents a surface suitable for containing a plurality of said splines of a valuable material.

More in particular said bearing spline is arranged on a working plane and its upper surface is spreaded with an adhesive substance.

A plurality of splines realised with a valuable material, arranged aligned and one near the other and opportunely spaced, are applied on such surface spreaded with an adhesive substance.

The plank so realised is put under the action of a press and after gluing, it is longitudinally and transversely sawed obtaining a plurality of little planks.

The methods described and other ones which are not quoted here for descriptive brevity, being however known by the experts on the field, present the inconvenience to be methods which are based quite only on the manual intervention of the operators in charge, which manually execute all the operations of arrangements of the base splines on the working plans, of spreading with adhesive substance the base splines, of overlapping of the splines of valuable material on the base splines and finally of transport of the little planks under the action of the press. It is possible to comprehend that such high degree of manual ability involves high production costs and limited productions.

A further inconvenience is for the material methods described don't succeed in reproducing in time the qualitative standard of the product.

Another inconvenience is that the splines don't present the same thickness and when they are put under the action of the press, they result subject to different pressures and therefore some of them are not well glued on the underlying bearing.

A further inconvenience is for the base splines, on their length, should present a measure which is exactly a multiple of the length of the splines of valuable material which are glued on them and this obviously involves an increasing of the scraps.

GB-A-704,327 and DE-U-29 512 007 disclose gluing machines for splines which comprise means for feeding a plurality of strips of hard wood, means for feeding a plurality of strips of soft wood, means for gluing said soft and said hard strips together, means for pressing them. No means are provided for cutting the manufactured wood after said kind of operations.

The present invention intends to overcome such inconveniences.

In particular one of the purposes of the invention is for realising a gluing machine which allows to obtain the gluing of two splines in an automatic and continuous way.

A further purpose is for the gluing machine of the invention realises superior productions than the equivalent productions realisable with the same use of labour.

Another purpose is for such gluing machine permits to obtain lower production costs for production units than those ones which is possible to obtain using the systems of the known type.

A further purpose is for the gluing machine of the invention keeps in time the quality of the product which it realises.

Another purpose is for the gluing machine of the invention permits to obtain the same gluing quality of the splines between them, even if they don't present all the same thickness.

And not last purpose is for the gluing machine of the invention permits a saving of the material with which the splines of not valuable material are realised at face quantity of final little planks produced.

The purposes described are achieved by the realisation of a gluing machine for splines the main features of which are according to claim 1.

According to a preferred embodiment, the gluing machine of the invention presents a first transmission line which makes these first splines realised with a valuable material and coming from the first loading groups to advance and a second transmission line which makes the second splines realised in a not valuable wood and coming from second loading groups, to advance according to the same direction.

Said second splines present, each of them, a length and a width suitable for receiving a plurality of said first splines of a valuable material which are arranged on each of said second splines and are aligned one near the other, and placed side by side along two rows.

Each of said transmission lines present a dispenser suitable for spreading the splines which advance along said row with an adhesive substance.

Drying lamps respectively for the wooden material which forms the splines and for the layer of glue that is spreaded over them, are arranged above and below said glue dispenser.

The pressing station is formed of a plurality of pressure neutral cylinders, arranged in a fixed position, under whose action the planks formed of said splines of valuable materials, overlapped to said splines of not valuable material, are put, subject to a joining of said splines during their passing through a coupling station, arranged above the pressing station and below the drying lamps.

In an intermediate position, in comparison with said pressing station, a group of longitudinal cutting is present. This one executes a longitudinal cut of the spline of not valuable material dividing it in two strips one near the other that are further transversally cut by a transversal cutting group arranged below the pressing station. A plurality of little planks is in this way obtained.

The purposes described will be better pointed out during the description of a preferred embodiment of the invention given as an example but not as a restriction and represented in the enclosed drawings where:
- fig. 1 shows the gluing machine of the invention in a lateral view;
- fig. 2 shows the enlargement of the front side of the gluing machine of the invention represented in fig. 1;
- fig. 3 shows the enlargement of the central part of the gluing machine of the invention represented in fig. 1;
- fig. 4 shows the enlargement of the terminal part of the gluing machine of the invention represented in fig. 1;
- fig 5 shows the particular of the loading groups of the splines of the gluing machine of the invention;
- fig. 6 shows a cross section of the gluing machine of the invention realised according to the A-A plane of fig. 1 and fig. 2;
- fig. 7 shows the cutting group which realises the transversal cut of the plank in the position it takes before the beginning of the operation of transversal cut;
- fig. 8 shows the cutting group of fig. 7 in a top view;
- fig. 9 shows the cutting group of fig. 7 during the transversal cut phase;
- fig. 10 shows the cutting group of fig. 9 in a top view;
- fig. 11 shows the cutting group of fig 7 after the transversal cut;
- fig. 12 shows the cutting group of fig. 11 in a top view;
- fig. 13 shows a plank before the longitudinal cut and the transversal cutting, formed of a base spline of a not valuable material on which more splines of valuable material are glued;
- fig. 14 shows a possible gluing method of first splines on second ones.

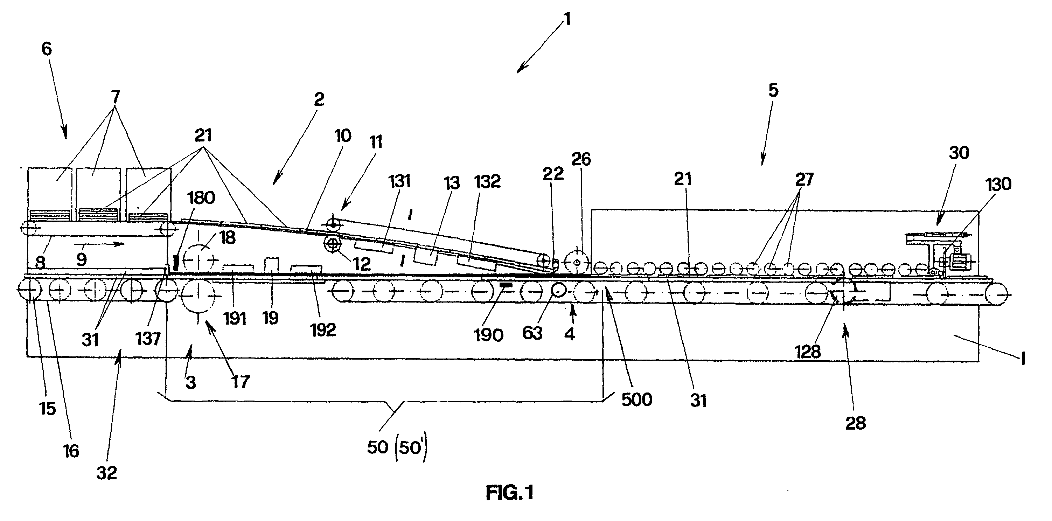

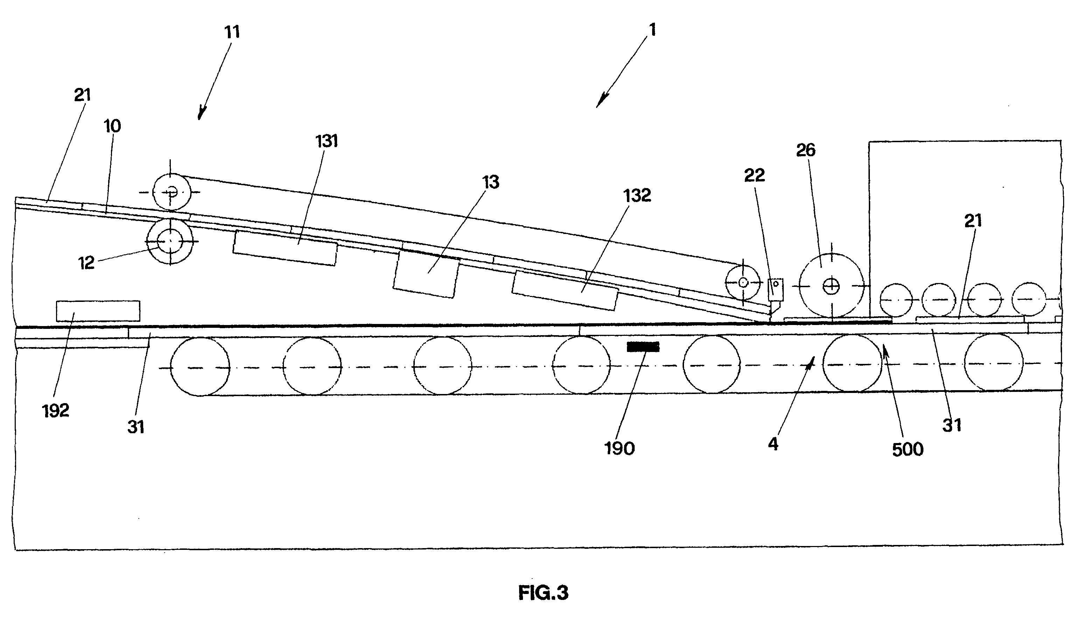

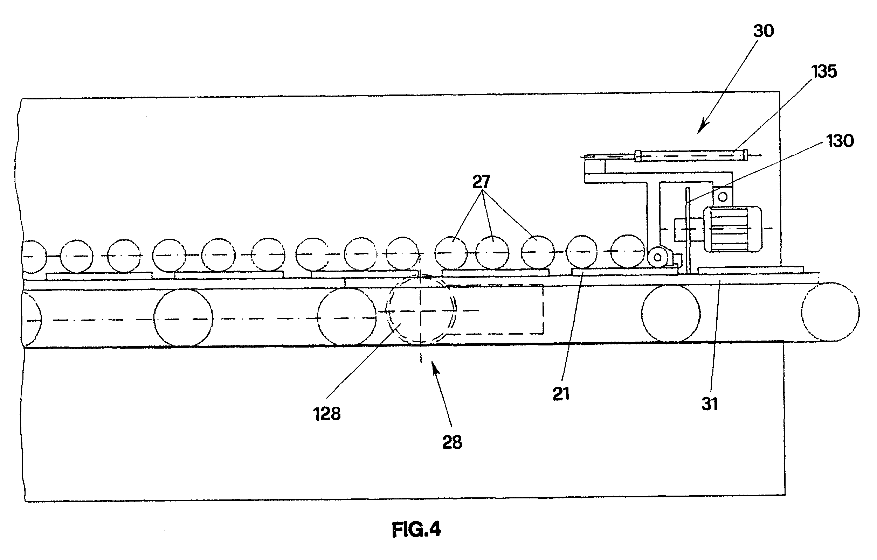

As figs 1, 2, 3 and 4 show, the gluing machine of the invention, indicated as a whole with 1, comprises a first transmission line indicated as a whole with 2, opposite to a second underlying transmission line, indicated as a whole with 3, where both those lines are suitable to make respectively first splines 21 and second splines 31, to advance. Said splines are first of all connected with one another in correspondence with a coupling station 4 and are made to adhere reciprocally in a pressing station, indicated as a whole with 5, subject to the spreading their surfaces in contact with an adhesive substance by glue dispensers 13 and 19, respectively belonging to the first and second transmission line.

Considering said first transmission line, indicated as a whole with 2, it can be observed that it comprises a first loading group, indicated as a whole with 6, supplied in all with six containers arranged three on each side of the gluing machine and each of them indicated with 7, being a plurality of said first splines 21 piled up, one on the other, in each of these containers.

Obviously the number and the dimensions of said containers 7 could be different.

Below said containers 6 a conveyer 8 which makes said splines to advance according to the direction 9, is present.

Said conveyer after the extraction of the spline from the containers 7, conveys them along the chute 10 and they meet a couple of idler wheels, indicated as a whole with 11.

In order to improve the absorption of the glue by the spline 21, the lower roll 12 of said couple of idle wheels 11 is knurled and impresses some tracks on the surface of the spline 21 which receives the adhesive material from a first glue dispenser 13 which is arranged below said idle wheels 11.

A regenerator 131 is arranged over said first glue dispenser 13 in order to improve the adherence of the glue on the first spline 21, while a reheater which is indicated with 132 is arranged below the glue dispenser for favouring the adherence of the first splines when they'll be overlapped to the underlying second splines.

In particular said regenerator and said reheater are both of them formed of thermic emission lamps which are useful respectively for enlarging the pores of the wood in order to favour the penetration of the glue and to create a pre-drying of the glue spreaded in order to favour the following coupling of each first spline with the second one opposite to it.

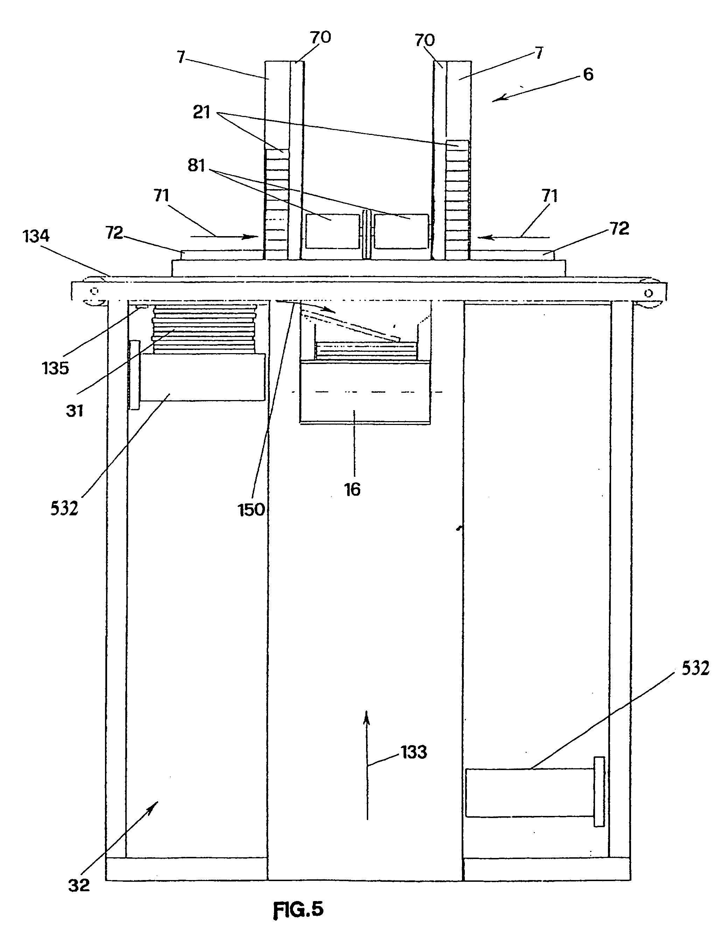

Considering the second transmission line 3, as it can be observed in fig. 1, it comprises a conveyer 16, supported by a plurality of conveyor rolls 15, which makes to advance, according to the same direction 9 before mentioned, said second splines 31, which are conveyed on the conveyer 16 by a second loading group, indicated as a whole with 32 and represented in fig. 5.

A couple of second idle wheels 17, whose upper roll, indicated with 18, is knurled, in order to impress some tracks on the upper face of the spline 31 in order to favour the penetration of the glue, is present at the end of the conveyer 16.

A regenerator 191, a second glue dispenser 19 and finally a reheater 192 are arranged in the order below said idle wheels 17 similarly to the first transmission line 2. They execute on the second splines 31 and on the layer of adhesive substance spreaded on them, the same functions previously described for the first transmission line 2.

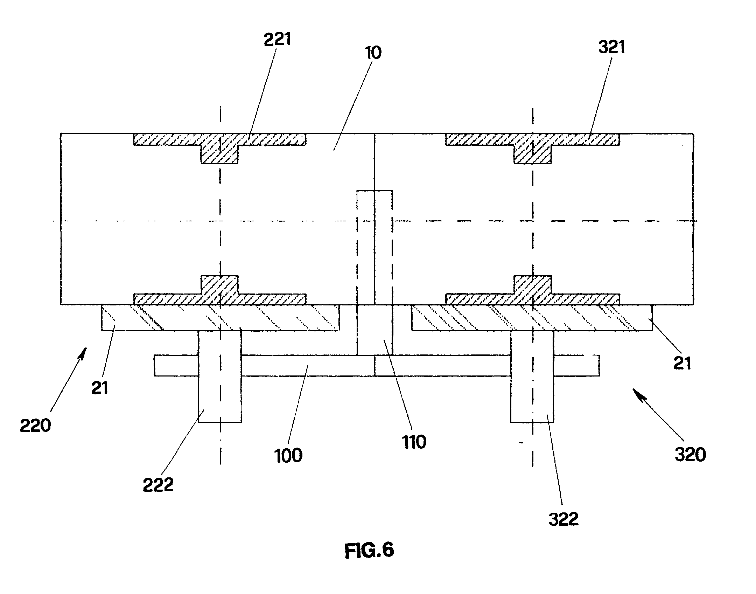

The first splines conveyed by the first transmission line 2 and the second splines 31 conveyed from the second transmission line 3, converge in correspondence with the coupling station 4 where a selector 22 is present. Said selector is activated by a pneumatic actuator and controlled by a activating and controlling group, not represented in figure, which allows the advancement of the first splines 21 for the coupling with the second underlying splines 31, only when said second splines 31 are present. With regard to this matter, as it can be observed in fig. 6, the first splines 21 are conveyed from the first transmission line 2 till the coupling station 4 arranged on two rows 220 and 320.

Said selector is operated by a pneumatic actuator and is controlled by an operation and check unit, not shown in the figure, allowing the advancement of the first splines 21 for the coupling with the underlying second splines 31 only when said second splines 31 are present. With regard to this matter, as it can be observed in fig. 6, the first splines 21 are conveyed, arranged in two rows 220 and 230, from the first transmission line 2 to the coupling station 4. In order to synchronize the opening of the selector 22 so that the first splines 21 lie over the underlying second splines 31 when the latter are, them too, in correspondence with the selector 22, a sensor 180 is placed near the upper roll 18, detecting the presence of the second splines 31 at the outlet of the conveyer 16.

An encoder 190, which is placed at a predetermined distance from the sensor 180, detects the advancement of the second splines 31 along the transmission line 3.

The sensor 180 and the encoder 190 are electrically connected with the check unit processing the information received by the sensor 180 and by the encoder 190 and according to the distance between the encoder and the sensor, the said check unit determines the time for opening the selector 22 in order to make the descent of the first splines 21 possible.

When the sensor 180 does not detect the presence of the second splines any more, the check unit makes the descent of further first splines 21 possible as long as second splines 31 are gone through along the transmission line 3 filling up the length which corresponds to the distance between the encoder and the sensor.

Now the check unit operates the closing of the selector 22 stopping the descent of further first splines 21.

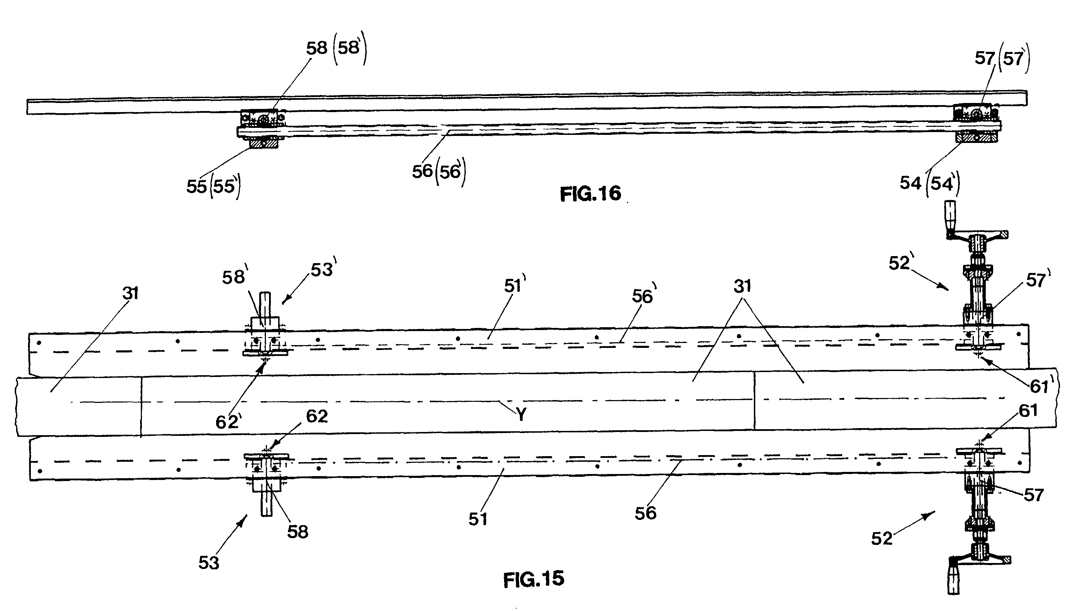

Particularly it can be observed in fig. 1 that the second splines 31, which are placed between the upper roll 18 and the selector 22, are trued as to the longitudinal axis Y of the machine by means of a couple of centering units, marked with 50, 50' as a whole, one opposite to the other. Each one of said centering units 50, 50' is placed on one side of the machine along the transmission line 3, and are visible even more in detail in the fig. 15 to 17.

Each centering unit 50, 50' is formed by a centering rod 51, 51'which is placed on one side of the machine and is in contact with the edges of the second splines 31. Said centering rod 51, 51' is supported by a couple of respective front 52, 52' and back 53, 53' shifting units which are suitable to move the centering rod 51, 51' crosswise keeping it parallel to the longitudinal axis Y of the machine.

The shifting units which are placed on one side of the machine are the same as those which are placed on the opposite side and each one of them is formed by a nut screw 54, 55 and 54', 55' which is coupled with one of the ends of a threaded rod 56, 56'.

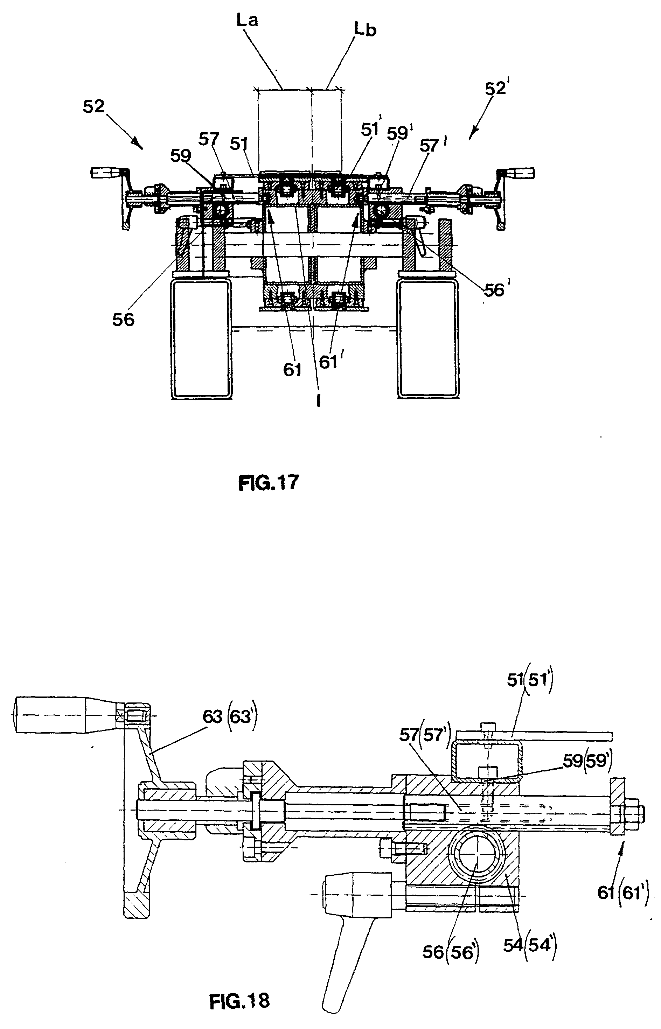

Each front shifting unit 52, 52' is visible in detail in the longitudinal section of fig. 18 where it can be observed that said front shifting unit 52, 52' is provided with an adjustement handwheel 63, 63'.

Each back shifting unit 53, 53' has the same structural form of the corresponding front shifting unit 52, 52' but it is unprovided with an adjustement handwheel.

Each shifting unit has also, referring to fig. 18, a screw 57, 58 and 57', 58' which is placed through the inside of the respective nut screw 54, 55 and 54', 55' body and meshes with the corresponding threaded bar 56, 56'.

Each screw 57, 58 and 57', 58' has the end 61, 62 and 61', 62' which is fixed to the casing I of the machine and is made integral with the respective centering rod 51 and 51' by means of a connection element 59, 59' which is visible in the drawings only through the front shifting units 52, 52'.

Moreover, as it has already been said, each one of the front shifting units 52 and 52' has, at the free end of the screw 57 and 57', a handwheel 63 and 63' which is maneuvred by the operator to cause the rotation of the screw itself.

When the operator rotates the handwheels 63 and 63', both the centering rods 51, 51' come nearer or farther reciprocally keeping parallel to one another and therefore truing the second splines 31 as to the axis Y of the machine as a function of their length.

In fig. 17, as a demonstration, the front adjustement units 52 and 52' are shown in two adjustement positions, the first corresponding to the longest distance La from the axis Y and the second corresponding to the shortest distance Lb.

It is evident that such distances could be changed as a function of the width of the second splines 31 which are machined.

In particular in fig. 6, which represents the cross section A- A of the chute 10 represented in fig. 1, it can be observed that each first spline 21 is made to advance by a conveyer respectively 221 and 321, and it is supported in the lower part by a fixed supporting blade, respectively 222 and 322, which is connected with the chute 10 by a supporting bar 100 transversally arranged and supported by a bracket 110.

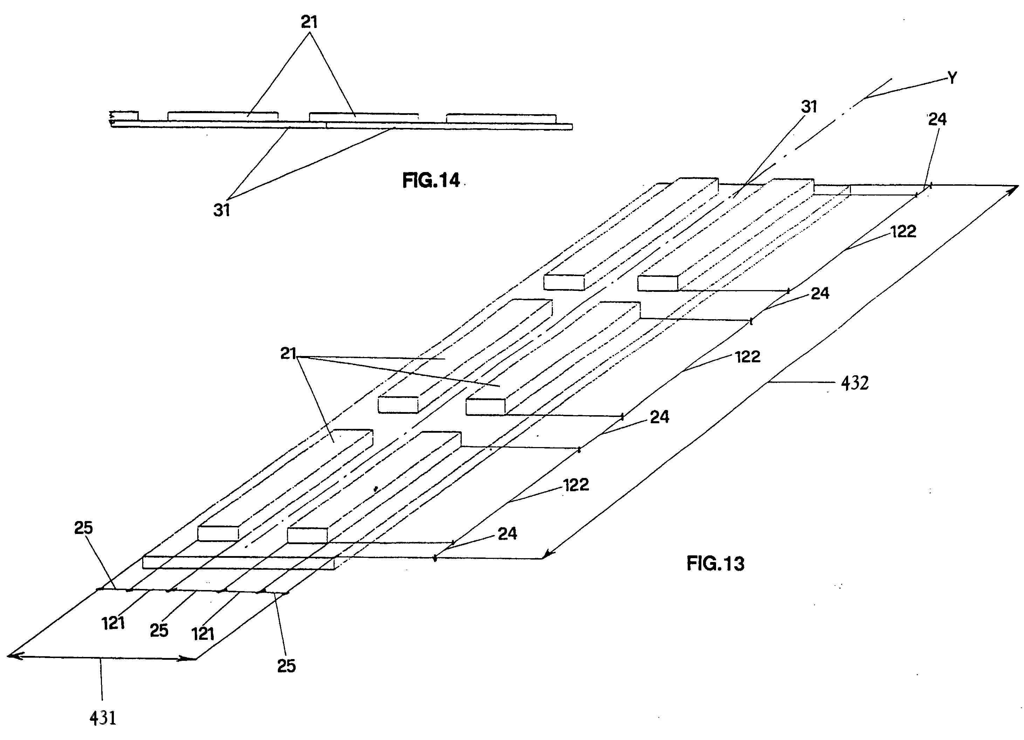

Because, as it can be observed in fig. 13, each of said first splines 31 presents a width 431 and a length 432 greater than the length 122 and the width 121 of each of said first splines 21, the sorter 22, on the base of a prefixed programme, controls the descending of each first spline 21 on the underlying spline 31 in order that said first splines 21, beside being arranged on two rows, result also spaced out of quantity 24 in a longitudinal way and 25 in a transversal way. Such distances should be sufficient for permitting the longitudinal and transversal cut of the second splines 31 in order to obtain the final little planks, as it will be described further.

It is important to observe that the splines advance along the transmission lines in contact head to tail with one another. The sorter 22 controls the descending of each first spline 21 in order to assure the immutability of the longitudinal distance 24, visible in fig. 13, in between all the first splines, independently from the length of the underlying splines 31 which could be of different lengths.

It could therefore happen that a full number of first splines 21 is not glued during the gluing on a same second spline 31, as represented in fig. 13, but that the first head and tail splines could be glued in between two second splines 31, one near the other, as represented in fig. 14. It is just such circumstance of having the possibility of gluing the first splines in continuous on the underlying second splines, which permits to use splines 31 having any length and therefore without the necessity of cutting them of a constant length, beginning from the board from which they are formed. This permits to reduce the scraps, achieving therefore one of the purposes for which the machine of the invention has been conceived.

With regard to said coupling station 4, it is supplied with contrasting means substantially formed of a pressure cylinder 26, motorised, which couples the first splines 21 with the underlying second splines 31, in order to obtain the planks 500 which are introduced in the pressing station indicated as a whole with 5. The just mentioned sorter 22 which rules the descending of the splines 21 on the underlying splines 31, is part of the coupling station 4.

The pressing station 5 which receives the planks 500, is formed of a plurality of pressure means formed of pressure rolls 27, arranged in fixed positions, aligned with one another, according to the advancing direction of the splines and neutral on their axis, which keep each first spline 21 adherent to the underlying second spline 31, till the gluing is realised.

A longitudinal cutting group 28 is arranged in an intermediate position in comparison with said pressing station 5. Said group is formed of a circular saw 128 which executes the cut of the plank 500 according to the length and in an intermediate position of the distance 25 which transversally divides the first splines 21, obtaining two strips parallel to one another. Finally a transversal cutting group 30 is present below said pressing station 5. Said group, by a further circular saw 130, transversally cuts said strips in correspondence with the distance 24 between head and tail of each first spline 21. A plurality of little planks 501 is this way obtained at the exit of the gluing line. Each little plank is formed of a first spline 21 of valuable material, glued on an underlying support of not valuable material, obtained by the cutting of the second spline 31.

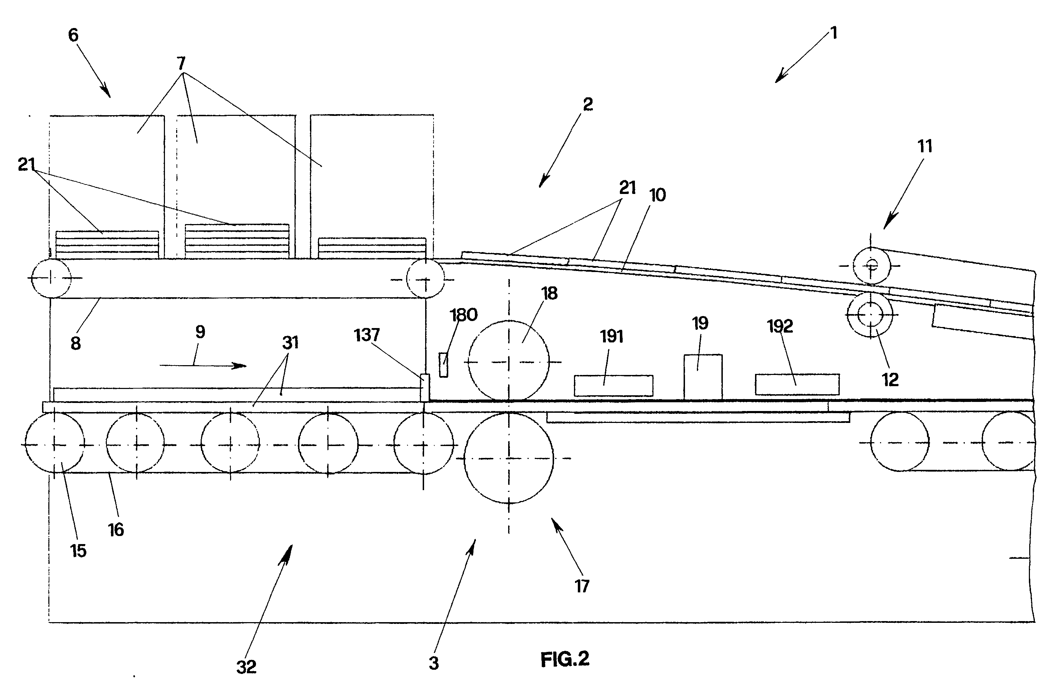

The functioning of the gluing machine of the invention is described referring to the figs. 2, 3 and 4 which represent other enlargements respectively of the loading, central and unloading parts of the gluing machine.

As it can be observed in fig. 5, to arrange the first splines 21 and the second splines 31 respectively in the first loading group 6 and in the second loading group 32 is, first of all, indispensable in order to operate the gluing machine of the invention to work.

With regard to this first loading group 6, the first splines 21 are arranged overlapped to one another inside the containers 7, having internal extractable shims 70 which are placed as a function of the width of the first splines 21 in order to keep them always aligned inside the container 7, independently of their width.

The first splines 21 are extracted by horizontal unthreading according to the direction 71, by an unthreading blade 72 activated by actuators which are not represented in figure. The activation of such unthreading blade 72 arranges the first splines 21, aligned one near the other, in head to tail contact on the conveyer 8 visible in fig. 1, on which they are kept adherent by suitable pressure rolls 81, visible in fig. 5 in order to advance according to the direction 9.

Said second splines 31, as it can be observed in fig. 5, are inserted on two roller tables 532, belonging to the second loading group 32, where each roller table is vertically movable according to the direction 133 by activating means, not represented. The vertical shifting of said roller tables 532 arranges said second splines 31 in an useful position to be moved on the conveyer 16 by a transversal transfer belt 134. It can be observed in particular in fig. 5 that said transversal transfer belt 134 is supplied with projections 135 which, contrasting with each second panel 31, transfer it according to the direction 150 from the roller table 532 to the conveyer 16. It can be also observed that said roller tables 532 are two of them, in order that, while one of said tables is lifting for giving the feed of the second panels to the conveyers 16, the other one is loaded by the operator in order to prepare a spare of second panels 31.

Also the second panels 31 are made to advance by the conveyer 16, aligned one following the other and in head to tail contact, because a controlling barrier 137, visible in fig. 1 and arranged at a distance from the conveyer 16, which is similar to the thickness of the second panel 31, permits the unthreading of the panels 31 one at the time.

The first 21 and the second 31 spline loaded this way, advance both in the direction 9 and are both pre-dried respectively by the pre-drying units 131 and 191 before the spread of an adhesive material on their surfaces by means of glue dispensers, respectively 13 and 19.

Said glue layer is dried up by reheaters respectively 132 and 192, and finally said first splines 21 are coupled with the underlying second splines 31 in correspondence with the loading group 4, where they are pressed and made to advance by the pressure cylinder 26.

The plank 500 this way obtained, enters the pressing station 5 where the pressing action of the rolls 27 perfects the reciprocal gluing of the splines and the circular saw 128 of the longitudinal cutting group 28 longitudinally cuts in continuous the plank 500, dividing it in two strips one beside the other.

At the exit of the pressing station 5 the plank 500, so divided in two strips, is transversally cut by the circular saw 130 of the just mentioned transversal cutting group 30 which is represented more in details in the figs. from 7 to 12.

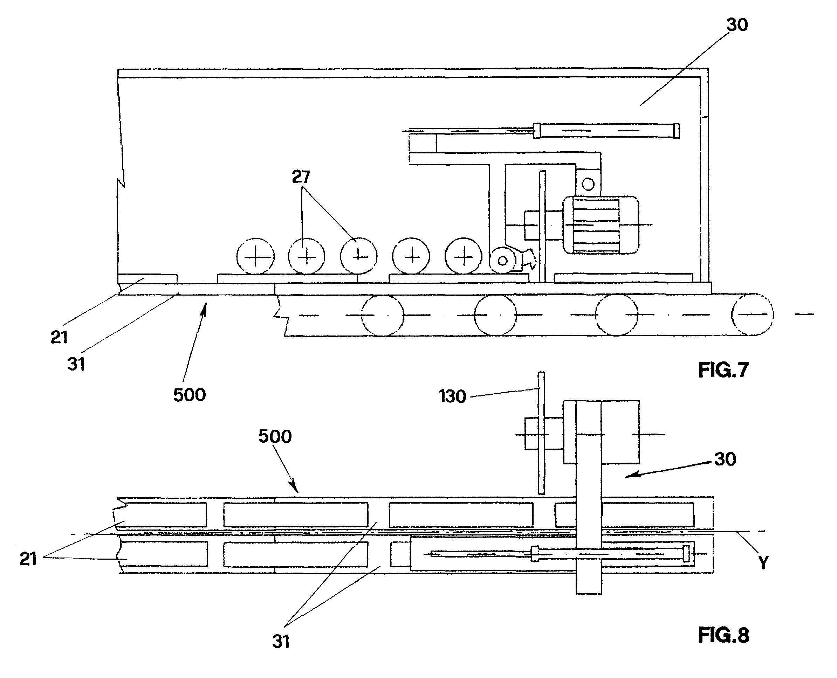

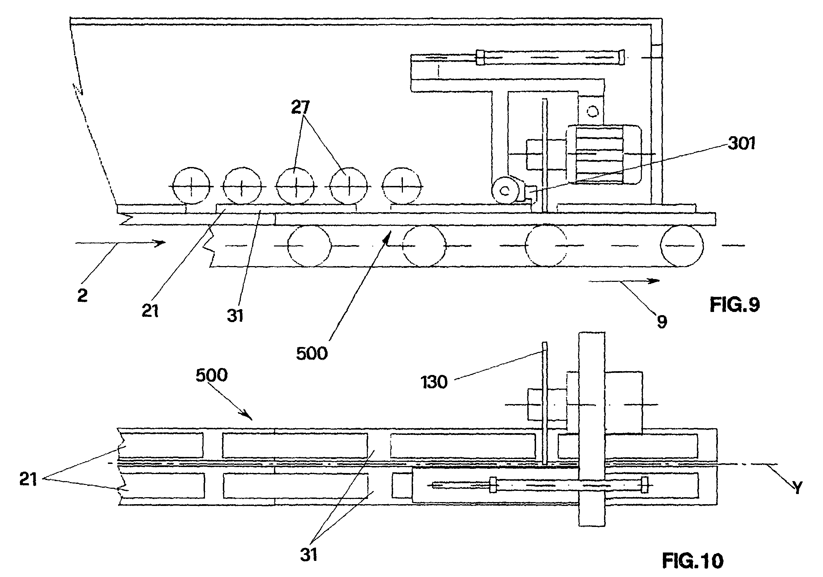

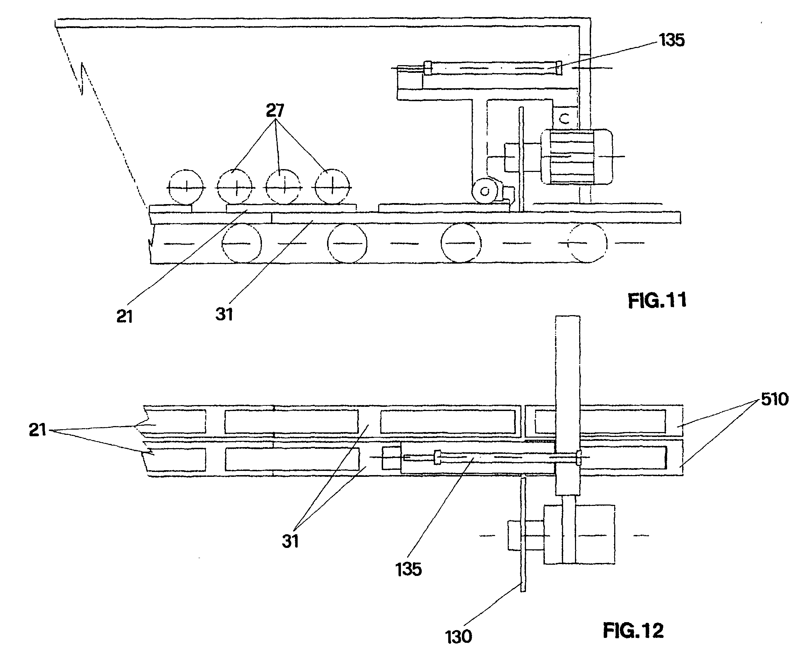

In particular when the plank 500 is in correspondence with the transversal cutting group 30 as represented in figs. 7 and 8, the first spline 21 is hooked by the draft tooth 301, as it can be observed in fig. 9, and the advancement of the plank 500, according to the direction 9, shifts, according to the same direction, the whole transversal cutting group 30. At the same time, as it can be observed in fig. 10 the crosscut saw with which the group is supplied, begins to transversally cut the plank 500 and the cut continues during the advancement of the plank. The cut finishes when the circular saw 130 has passed through the plank as it can be observed in fig. 12, and the little planks 510 so realised fall because of the force of gravity, in an accumulating rolling machine or another device not represented which moves them away from the gluing machine.

From the situation represented in figs. 11 and 12, by a pneumatic jack 135, all the transversal cutting group 30 is made therefore to withdraw and restored in the situation represented in figs. 7 and 8, ready for hooking the following first spline 21 and for executing a further transversal cutting of the plank 500.

It can be observed that in such further transversal cutting operation, the circular saw 130 begins from the position represented in fig. 12 which it had reached at the end of the preceding cutting.

It is possible to comprehend on the basis of what has been described that the gluing machine of the invention achieves all the prefixed purposes.

First of all the purpose of mechanising the gluing operation of the splines, operation which, according to the known technique, is executed only in a manual way, is achieved.

The gluing machine of the invention, besides mechanising the gluing operation of the splines, also permits to execute such gluing continually, consequently reducing the production times.

The automation of the process permits also to realise the repetitiveness of the quality in time, which results vice - versa difficulty realisable using the manual systems.

Besides the machine of the invention achieves also the purpose of realising in all the little planks an uniform gluing of the splines which form them. Indeed, since all the splines are subject to the pressing operation by all the pressure cylinders present in the pressing station 5, possible differences of thickness of the splines themselves are unimportant for a good and uniform gluing.

The gluing machine of the invention achieves also the purpose of optimising the use of material which forms the base splines. Indeed, it is known that the splines of valuable material could be glued also straddling two adjacent base splines and in head to tail contact, optimising the use of material which forms said base splines which can be used even if they present a different length of the single first splines. During the execution some changes could be introduced in the gluing machine of the invention, consisting for example in arranging a different number of loaders of the splines which equip the loading groups or in changes of the spreading groups of the glue, the drying up groups or the kinematic mechanisms of advancement of the splines.

In other embodiments, for example, the drying up groups of the splines and of the glue could not be present.

Besides, according to the demands of the utilizer, in the first transmission line and in the second transmission line splines of a different width and length could be made to advance. In particular each plank could be formed by any number of rows of first splines of a valuable material.

Generally, besides, the machine of the invention could not present such longitudinal and transversal cutting groups because the resulting plank could be worked in one or more different operating units suitable for cutting it and obtaining the little planks.

The machine of the invention, which, as it has been described, results particularly suitable for realising the little planks for parquet, could be useful also for the construction of compound structures of splines of different dimensions formed by the gluing of two or more splines one on the other. It is evident that in case of gluing of more than two splines, because of the composition of the structure, it will be necessary to pass many times the manufacture through the gluing machine.

It is understood however that the said variant and other possible ones are all to be considered protected by the present invention within the scope of the appended claims.

## Claims

1. Gluing machine (1) for splines (21, 31) comprising:
- at least a first transmission line (2) supplied with a first conveyer (8), suitable for realising the advancement of first splines (21) coming from at least a first loading group (6);
- at least a second transmission line (3) supplied with a second conveyer (16) suitable for realising the advancement of second splines (31) coming from at least a second loading group (32) with said first and second transmission lines being opposite to one another;
- at least one glue dispenser (13, 19) arranged below at least one of said loading groups (6, 32) of at least one of said transmission lines (2, 3) suitable for spreading a layer of adhesive substance on the surface of each of said splines (21, 31) which advances along the corresponding transmission line (2, 3);
- one or several centering units (50, 50') of said second splines (31), arranged laterally along said transmission line (3);
- at least a coupling station (4) supplied with contrasting means (26), suitable for reciprocally uniting said first (21) and said second (31) splines in correspondence with the surface supplied with said adhesive substance;
- at least a pressing station (5) supplied with a plurality of pressure means (27) arranged aligned according to the advancing direction of said splines and suitable for reciprocally forcing said splines (21, 31) coupled with one another;
- at least an operation and check unit of said gluing machine, being the spreading of the adhesive substance, the coupling and the pressing of said splines, realised in continuous during the advancement of the splines (21, 31) themselves along the gluing machine;
**characterised in that** a transversal cutting group (30) is arranged below said pressing station (5), said cutting group is supplied with a circular saw (130) and with motorization means suitable for realising, in continuous and during the advancement of the splines, a plurality of transversal cuts on each of said second splines (31) for realising a plurality of little planks (510), each of them supplied with a first spline (21).

2. Gluing machine (1) according to claim 1) **characterised in that** a longitudinal cutting group (28) supplied with a circular saw (128) suitable for realising a longitudinal cut in continuous on said splines (31) is arranged in said pressing station (5).

3. Gluing machine (1) according to claim 1) **characterised in that** said at least a first transmission line (2) comprises:
- a first conveyer (8) on which said first splines (21) coming from a first loading group (6) are arranged;
- a chute (10) arranged after said first conveyer (8) and aligned with it, along which said first splines (21) are conveyed ;
- a couple of first idle wheels (11) arranged in an intermediate position in correspondence with said chute (10), suitable for making said first splines (21) to advance under the action of a first glue dispenser (13).

4. Gluing machine (1) according to claims 1) or 2) **characterised in that** said at least a second transmission line (3) comprises:
- a second conveyer (16) supported by a plurality of conveyer rolls (15), on which said second splines (31) coming from a second loading group (32) are arranged;
- a couple of second idle wheels (17) arranged below said second conveyer (16) suitable for making said second splines (31) to advance under the action of a second glue dispenser (19).

5. Gluing machine (1) according claim 4) **characterised in that** a sensor (180) is arranged in correspondence with said couple of second idle wheels (17), which is suitable for detecting the presence of said second splines (31) and **in that** an encoder (190) is placed in correspondence with said coupling station (4), detecting the advancement speed of said second transmission line (3), said sensor (180) and said encoder (190) being electrically connected to said check unit.

6. Gluing machine (1) according to claims 3) or 4) **characterised in that** over each of said glue dispensers (13, 19) a regenerator (131, 191) of said splines (21, 31) is arranged, and below each glue dispensers (13, 19) themselves, a reheater (132, 192) of said adhesive substance spreaded from said dispensers (13, 19), is arranged.

7. Gluing machine (1) according to claim 6) **characterised in that** each of said heating groups (131, 191; 132, 192) is formed of heating lamps.

8. Gluing machine (1) according to claim 1) **characterised in that** said first loading group (6) comprises:
- a plurality of containers (7) arranged aligned with one another and arranged on two opposite sides of the gluing machine, being said containers (7) suitable for containing, each of them, a plurality of first splines (21) overlapped to one another;
- unthreading means (72) suitable for transferring each of said first splines (21) from the relevant container (7) towards the surface of said first conveyer (8);
- actuators suitable for realising the shifting of said unthreading means (72).

9. Gluing machine (1) according to claim 8) **characterised in that** there are spacing elements (70) which are suitable for truing said first splines (21) independently of their width.

10. Gluing machine (1) according to claim 1) **characterised in that** said second loading group (32) comprises:
- a couple of roller tables (532) vertically movable and arranged adjacent to one another in opposite parts of said second conveyer (16), being each of said roller tables (532) suitable for receiving a plurality of second splines (31) overlapped to one another;
- a transfer belt (134) arranged transversally to said roller tables (532) and supplied with projections (135) suitable for hooking and transferring one after the other said second splines (31) from each of said roller tables (532) towards said second conveyer (16).

11. Gluing machine (1) according to claim 1) **characterised in that** said centering units (50, 50') are two, opposed to one another and placed one on each side of said second transmission line (3) in contact with said second splines (31).

12. Gluing machine (1) according to claim 11) **characterised in that** each centering unit (50, 50') is formed by a centering rod (51, 51') arranged on the machine side and put in contact with the edges of said second splines (31), each centering rod (51, 51') being supported by a couple of respective front (52, 52') and back (53, 53') shifting units which are suitable to move it crosswise keeping it parallel as to the longitudinal axis (Y) of the machine.

13. Gluing machine (1) according to claim 12) **characterised in that** each shifting unit (52, 52'; 53, 53') includes a nut screw (54, 54'; 55, 55') which is coupled with a respective screw (57, 57'; 58, 58') having an end which is fixed to the casing of the machine.

14. Gluing machine (1) according to claim 13) **characterised in that** said screws (57, 58; 57', 58'), belonging to each centering unit, are mechanically connected one to the other by means of a threaded bar (56, 56') which is supported at its ends by the respective nut screw (54, 55; 54', 55').

15. Gluing machine (1) according to claim 12) or 13) **characterised in that** the screw (57, 57') of at least a shifting unit (52, 52') of each centering unit (50, 50') has a handwheel (63, 63').

16. Gluing machine (1) according to claim 1) **characterised in that** said coupling station (4) comprises:
- a sorter (22) which cooperates with said first splines (21) suitable for permitting their coupling with the underlying splines (31) only when said second splines (31) are present under each first spline (21);
- activating and controlling means of said sorter (22);
- a pressure cylinder (26) which couples said first splines (21) with the underlying second splines (31), being said pressure cylinder (26) supplied with a rotatory motion suitable for introducing the plank (500) this way obtained in said pressing station (5).

17. Gluing machine (1) according to claim 1) **characterised in that** said pressing station (5) comprises a plurality of pressure rolls (27) suitable for keeping coupled and adherent said splines (21, 31).

18. Gluing machine (1) according to claims 3) or 4) **characterised in that** in each couple of said idle wheels (11, 17) one of said rolls (12, 18) is a knurled roll suitable for impressing tracks on the surface of the corresponding spline (21, 31).

19. Gluing machine (1) according to claim 8) **characterised in that** said unthreading means are formed of a blade (72) arranged in correspondence with the bottom of each of said containers (7) and suitable for unthreading each of said first splines (21) one after the other from said container, when it is moved according to a horizontal direction (71) by actuators.

20. Gluing machine (1) according to claim 3) **characterised in that** said chute (10) is supplied with a couple of conveyers (221, 321) adjacent to each other belonging to the structure of said chute (10), being each of said first splines (21) kept adherent to the corresponding conveyer (221, 321) by a fixed supporting blade (222, 322) which is connected with said body of said chute (10) by a supporting bar (100) supported by a bracket (110).

## Patentansprüche

1. Leimauftragmaschine (1) für Holzleisten (21, 31), Folgendes umfassend:
- wenigstens eine erste Förderlinie (2) mit einem ersten Förderband (8), geeignet für den Vorschub erster, aus wenigstens einer ersten Aufgabeeinheit (6) stammender Holzleisten (21);
- wenigstens eine zweite Förderlinie (3) mit einem zweiten Förderband (16), geeignet für den Vorschub zweiter, aus wenigstens einer zweiten Aufgabeeinheit (32) stammender Holzleisten (31), wobei die erste und die zweite Förderlinie einander gegenüber liegen;
- wenigstens ein Leimausgabegerät (13, 19), angeordnet unter wenigstens einer der Aufgabeeinheiten (6, 32) von wenigstens einer der Förderlinien (2, 3), geeignet zum Auftragen einer Klebstoffschicht auf die Oberfläche jeder Holzleiste (21, 31), die an der entsprechenden Förderlinie (2, 3) entlang vorläuft;
- eine oder mehrere Zentriereinheiten (50, 50') für die zweiten Holzleisten (31), seitlich an der Förderlinie (3) entlang angeordnet;
- wenigstens eine Verbindungsstation (4) mit Kontrastmitteln (26), geeignet zur wechselseitigen Verbindung der ersten (21) und zweiten (31) Holzleisten an der mit dem Klebstoff versehenen Fläche;
- wenigstens eine Pressstation (5) mit einer Vielzahl entsprechend der Vorschubrichtung der Holzleisten gefluchteter Druckmittel (27), geeignet, die miteinander verbundenen Holzleisten (21, 31) gegenseitig zusammenzudrücken; .
- wenigstens eine Antriebs- und Kontrolleinheit der Leimauftragmaschine, da das Auftragen des Klebstoffs, die Verbindung und das Pressen der Holzleisten kontinuierlich während des Vorschubs der Holzleisten (21, 31) selbst an der Leimauftragmaschine erfolgt;
**dadurch gekennzeichnet, dass** eine Querschneideeinheit (30) unterhalb der Pressstation (5) angeordnet ist, die eine Kreissäge (130) umfasst sowie Antriebsmittel für die kontinuierliche Ausführung einer Vielzahl von Querschnitten an jeder der zweiten Holzleisten (31) während des Holzleistenvorschubs zur Herstellung kleiner, jeweils mit einer ersten Holzleiste (2 1 ) versehener Parkettstäbe (510).

2. Leimauftragmaschine (1) gemäß Patentanspruch 1), **dadurch gekennzeichnet, dass** sich in der Pressstation (5) eine Querschneideeinheit (28) mit einer Kreissäge (128) für die kontinuierliche Ausführung eines Längsschnitts in den Holzleisten (31) befindet.

3. Leimauftragmaschine (1) gemäß Patentanspruch 1), **dadurch gekennzeichnet, dass** die wenigstens eine erste Förderlinie (2) Folgendes umfasst:
- ein erstes Förderband (8), auf dem die ersten, aus einer ersten Aufgabeeinheit (6) stammenden Holzleisten (21) angeordnet sind;
- eine Rutsche (10) nach dem ersten Förderband (8) und auf dieses ausgerichtet, an der die ersten Holzleisten (21) entlang befördert werden;
- ein Paar erster Losrollen (11) in einer Zwischenposition in Entsprechung mit der Rutsche (10), geeignet dazu, dass die ersten Holzleisten (21) unter der Wirkung eines ersten Leimausgabegeräts (13) vorlaufen.

4. Leimauftragmaschine (1) gemäß Patentanspruch 1), **dadurch gekennzeichnet, dass** die wenigstens eine zweite Förderlinie (3) Folgendes umfasst:
- ein zweites Förderband (16), das gestützt wird durch eine Vielzahl von Förderrollen (15), auf denen die zweiten, aus einer zweiten Aufgabeeinheit (32) stammenden Holzleisten (31) angeordnet sind;
- ein Paar zweiter, unterhalb des zweiten Förderbands (16) angeordneter Losrollen (17), dazu geeignet, dass die zweiten Holzleisten (31) unter der Wirkung eines zweiten Leimausgabegeräts (19) vorlaufen.

5. Leimauftragmaschine (1) gemäß Patentanspruch 4), **dadurch gekennzeichnet, dass** ein Sensor (180) in Entsprechung mit dem Paar zweiter Losrollen (17) angeordnet und geeignet ist, das Vorhandensein der zweiten Holzleisten (31) zu erfassen, und dadurch, dass ein Encoder (190) in Entsprechung mit der Verbindungsstation (4) positioniert ist, der die Vorschubgeschwindigkeit der zweiten Förderlinie (3) erfasst, wobei Sensor (180) und Encoder (190) elektrisch mit der Kontrolleinheit verbunden sind.

6. Leimauftragmaschine (1) gemäß Patentansprüchen 3) oder 4), **dadurch gekennzeichnet, dass** über jedem der Leimausgabegeräte (13, 19) eine erste Wärmvorrichtung (131, 191) für die Holzleisten (21, 31) positioniert ist, und dass unter jedem Leimausgabegerät (13, 19) eine zweite Wärmvorrichtung (132, 192) für den von den Ausgabegeräten (13, 19) ausgegebenen Klebstoff angebracht ist.

7. Leimauftragmaschine (1) gemäß Patentanspruch 6), **dadurch gekennzeichnet, dass** jede der Wärmvorrichtungen (131, 191, 132, 192) aus Heizlampen besteht.

8. Leimauftragmaschine (1) gemäß Patentanspruch 1), **dadurch gekennzeichnet, dass** die erste Aufgabeeinheit (6) Folgendes umfasst:
- eine Vielzahl von aufeinander ausgerichteten und an zwei einander gegenüberliegenden Seiten der Leimauftragmaschine angeordneten Behältern (7), von denen jeder geeignet ist zur Aufnahme einer Vielzahl erster, übereinander gelegter Holzleisten (21);
- Ausfädelmittel (72) zum Transfer jeder der ersten Holzleisten (21) aus dem jeweiligen Behälter (7) auf die Oberfläche des ersten Förderbands (8);
- Stellglieder für die Ausführung der Bewegung dieses Ausfädelmittels (72).

9. Leimauftragmaschine (1) gemäß Patentanspruch 8), **dadurch gekennzeichnet, dass** Distanzierelemente (70) vorhanden sind, die geeignet sind, die ersten Holzleisten (21) unabhängig von ihrer Breite auszurichten.

10. Leimauftragmaschine (1) gemäß Patentanspruch 1), **dadurch gekennzeichnet, dass** die zweite Aufgabeeinheit (32) Folgendes umfasst:
- ein Paar senkrecht beweglicher und von einander entgegengesetzten Teilen des zweiten Förderbands (16) nebeneinanderliegend angeordneter Rollgänge (532), wobei jeder der Rollgänge (532) geeignet ist, eine Vielzahl zweiter, übereinander gelegter Holzleisten (31) aufzunehmen;
- ein quer zu den Rollgängen (532) angeordnetes Transferband (134) mit Auskragungen (135), die geeignet sind, die zweiten Holzleisten (31) einzeln nacheinander von jedem der Rollgänge (532) zu greifen und zum zweiten Förderband (16) zu transferieren.

11. Leimauftragmaschine (1) gemäß Patentanspruch 1), **dadurch gekennzeichnet, dass** zwei Zentriereinheiten (50, 50') vorhanden sind, die einander entgegensetzt sind, eine an jeder Seite der zweiten Förderlinie (3) und in Kontakt mit den zweiten Holzleisten (31).

12. Leimauftragmaschine (1) gemäß Patentanspruch 11), **dadurch gekennzeichnet, dass** jede Zentriereinheit (50, 50') aus einer Zentrierstange (51, 51') gebildet ist, die an der Seite der Maschine angeordnet ist und die Kanten der zweiten Holzleisten (31) berührt, wobei jede Zentrierstange (51, 51') durch ein Paar jeweils vorderer (52, 52') und hinterer (53, 53') Verstelleinheiten gehalten wird, welche geeignet sind, sie kreuzweise zu bewegen und dabei parallel zur Längsachse (Y) der Maschine zu bewahren.

13. Leimauftragmaschine (1) gemäß Patentanspruch 12), **dadurch gekennzeichnet, dass** jede Verstelleinheit (52, 52'; 53, 53') eine Mutterschraube (54, 54'; 55, 55') umfasst, die mit einer entsprechenden Schraube (57, 57'; 58, 58') verbunden ist, welche an einem Ende am Maschinengehäuse befestigt ist.

14. Leimauftragmaschine (1) gemäß Patentanspruch 13), **dadurch gekennzeichnet, dass** die zu jeder Zentriereinheit gehörenden Schrauben (57, 58; 57', 58') mechanisch miteinander verbunden sind durch eine Gewindestange (56, 56'), welche an ihren Enden durch die entsprechende Mutterschraube (54, 55; 54', 55') gehalten wird.

15. Leimauftragmaschine (1) gemäß Patentansprüchen 12) oder 13), **dadurch gekennzeichnet, dass** die Schraube (57, 57') wenigstens einer Verstelleinheit (52, 52') jeder Zentriereinheit (50, 50') ein Handrad (63, 63') aufweist.

16. Leimauftragmaschine (1) gemäß Patentanspruch 1), **dadurch gekennzeichnet, dass** die Verbindungsstation (4) Folgendes umfasst:
- einen Sortierer (22), der mit den ersten Holzleisten (21) zusammenarbeitet und ihre Verbindung mit-den darunter befindlichen Holzleisten (31) nur dann ermöglicht, wenn diese zweiten Holzleisten (31) sich jeweils unter jeder ersten Holzleiste (21) befinden;
- Mittel zur Aktivierung und Steuerung des Sortierers (22);
- einen Druckzylinder (26), der die ersten Holzleisten (21) mit den darunter liegenden zweiten Holzleisten (31) verbindet, wobei dieser Druckzylinder (26) eine drehende Bewegung ausführt, durch welche der so erzielte Parkettstab (500) in die Pressstation (5) eingeführt wird.

17. Leimauftragmaschine (1) gemäß Patentanspruch 1), **dadurch gekennzeichnet, dass** die Pressstation (5) eine Vielzahl von Druckwalzen (27) aufweist, welche die Holzleisten (21, 31) miteinander verbunden und aneinander anliegend halten.

18. Leimauftragmaschine (1) gemäß Patentansprüchen 3) oder 4), **dadurch gekennzeichnet, dass** in jedem Losrollenpaar (11, 17) eine der Rollen (12, 18) gerändelt ist, und dazu geeignet, Spuren an der Oberfläche der entsprechenden Holzleiste (21, 31) einzuprägen.

19. Leimauftragmaschine (1) gemäß Patentanspruch 8), **dadurch gekennzeichnet, dass** das Ausfädelmittel aus einem am Boden jedes der Behälter (7) positionierten Blatt (72) besteht und geeignet ist, jede der ersten Holzleisten (21) einzeln nacheinander aus dem Behälter herauszuziehen, wenn es durch Stellglieder in waagerechter Richtung (71) bewegt wird.

20. Leimauftragmaschine (1) gemäß Patentanspruch 3), **dadurch gekennzeichnet, dass** die Rutsche (10) mit einem Paar nebeneinander liegender Förderbänder (221, 321) versehen ist, die zur Struktur der Rutsche (10) selbst gehören, wobei jede der ersten Holzleisten (21) durch ein fest angebrachtes Tragblatt (222, 322) am entsprechenden Förderband (221, 321) anliegend gehalten wird, und dieses Tragblatt mittels einer mit einem Bügel (110) gehaltenen Tragstange (100) mit dem Körper der Rutsche (10) verbunden ist.

## Revendications

1. Encolleuse (1) pour lames (21, 31 ) comprenant:
- au moins une première ligne de transport (2) dotée d'une première bande transporteuse (8), apte à permettre l'avancement des premières barres de bois (21) provenant d'au moins un premier ensemble de chargement (6);
- au moins une deuxième ligne de transport (3) dotée d'une deuxième bande transporteuse (16), apte à permettre l'avancement des deuxièmes barres de bois (31) provenant d'au moins un deuxième ensemble de chargement (32), lesdites première et deuxième lignes de transport étant opposées l'une à l'autre;
- au moins un distributeur de colle (13, 19), situé au-dessousl d'au moins un desdits ensembles de chargement (6, 32) d'au moins une desdites lignes de transport (2, 3), apte à enduire d'une couche de substance collante la surface de chacune desdites barres de bois (21, 31) avançant le long de la ligne de transport y relative (2, 3);
- un ou plusieurs ensembles de centrage (50, 50') desdites deuxièmes barres de bois (31), situés latéralement le long de ladite ligne de transport (3);
- au moins une station d'accouplement (4), dotée de moyens de contraste (26), apte à unir réciproquement lesdites premières (21) et lesdites deuxièmes (31) barres de bois à hauteur de la surface enduite de ladite substance collante;
- au moins une station de pressage (5), dotée d'une pluralité de moyens de pression (27), alignés suivant la direction d'avancement desdites barres de bois et aptes à forcer réciproquement lesdites barres de bois (21, 31) couplées entre elles;
- au moins un ensemble de mise en marche et de contrôle de ladite encolleuse, la distribution de la substance collante, l'accouplement et le pressage desdites barres de bois étant effectués de manière continue pendant l'avancement des barres de bois (21, 31) le long de l'encolleuse;
**caractérisée en ce que** un ensemble de coupage transversal (30) est placé au-dessous de ladite station de pressage (5), ledit ensemble de coupage étant doté d'une scie circulaire (130) et de moyens de motorisation aptes à effectuer, de manière continue et pendant l'avancement des barres de bois, une pluralité de coupes transversales sur chacune desdites deuxièmes barres de bois (31) afin d'obtenir une pluralité de petites planches (510), dont chacune comporte une première barre de bois (21).

2. Encolleuse (1) selon la revendication 1) **caractérisée en ce qu'**un ensemble de coupage longitudinal (28), doté d'une scie circulaire (128) et apte à effectuer une coupe longitudinale de manière continue sur lesdites barres de bois (31 ), est placé dans ladite station de pressage (5).

3. Encolleuse (1) selon la revendication 1) **caractérisée en ce que** ladite au moins une première ligne de transport (2) comporte:
- une première bande transporteuse (8) sur laquelle lesdites premières barres de bois (21) provenant d'un premier ensemble de chargement (6) sont placées;
- un toboggan (10) situé après ladite première bande transporteuse (8) et alignée à ladite bande, le long de laquelle lesdites premières barres de bois (21 ) sont acheminées;
- une paire de premiers rouleaux d'entraînement (11) situés en position intermédiaire par rapport audit toboggan (10), aptes à faire avancer lesdites premières barres de bois (21) sous l'action d'un premier distributeur de colle (13).

4. Encolleuse (1) selon la revendication 1) ou 2) **caractérisée en ce que** ladite au moins une deuxième ligne de transport (3) comporte:
- une deuxième bande transporteuse (16), soutenue par une pluralité de rouleaux transporteurs (15), sur laquelle lesdites deuxièmes barres de bois (31) provenant d'un deuxième ensemble de chargement (32) sont placées;
- une paire de deuxièmes rouleaux d'entraînement (17) situés au-dessous de ladite deuxième bande transporteuse (16), aptes à faire avancer lesdites deuxièmes barres de bois (31) sous l'action d'un deuxième distributeur de colle (19).

5. Encolleuse (1) selon la revendication 4) **caractérisée en ce qu'**à hauteur de ladite paire de deuxièmes rouleaux d'entraînement (17) un capteur (180) est prévu qui est apte à détecter la présence desdites deuxièmes barres de bois (31) et **en ce qu'**à hauteur de ladite station d'accouplement (4) un encodeur (190) est prévu qui détecte la vitesse d'avancement de ladite deuxième ligne de transport (3), ledit capteur (180) et ledit encodeur (190) étant électriquement reliés audit ensemble de contrôle.

6. Encolleuse (1) selon la revendication 3) ou 4) **caractérisée en ce qu'**au-dessus de chacun desdits distributeurs de colle (13, 19) un préchauffeur (131; 191) desdites barres de bois (21, 31) est prévu et qu'au-dessous de chacun desdits distributeurs de colle (13, 19) un post-chauffeur (132; 192) de ladite substance collante enduite par lesdits distributeurs (13, 19) est prévu.

7. Encolleuse (1) selon la revendication 6) **caractérisée en ce que** chacun desdits ensembles chauffants (131, 191; 132, 192) comporte des lampes de chauffage.

8. Encolleuse (1) selon la revendication 1) **caractérisée en ce que** ledit premier ensemble de chargement (6) comporte:
- une pluralité de conteneurs (7) alignés entre eux et situés sur les deux flancs opposés de l'encolleuse, lesdits conteneurs (7) étant aptes à contenir chacun une pluralité de premières barres de bois (21) superposées l'une à l'autre;
- des moyens d'extraction (72) aptes à transférer chacune desdites premières barres de bois (21) du conteneur y relatif (7) à la surface de ladite première bande transporteuse (8);
- des actionneurs aptes à permettre le déplacement desdits moyens d'extraction (72).

9. Encolleuse (1) selon la revendication 8) **caractérisée en ce que** des entretoises (70) sont prévues qui sont aptes à centrer lesdites premières barres de bois (21) indépendamment de leur largeur.

10. Encolleuse 1) selon la revendication 1) **caractérisée en ce que** ledit deuxième ensemble de chargement (32) comporte:
- une paire de plans à rouleaux (532) pouvant être déplacés verticalement et juxtaposés l'un à l'autre sur les côtés opposés de ladite deuxième bande transporteuse (16), chacun desdits plans à rouleaux (532) étant apte à accueillir une pluralité de deuxièmes barres de bois (31) superposées l'une à l'autre;
- une bande de déplacement (134) placée transversalement aux dits plans à rouleaux (532) et dotée d'éléments saillants (135) aptes à accrocher et à déplacer l'une après l'autre lesdites deuxièmes barres de bois (31) de chacun desdits plans à rouleaux (532) à ladite deuxième bande transporteuse (16).

11. Encolleuse (1) selon la revendication 1) **caractérisée en ce que** lesdits ensembles de centrage (50, 50') sont au nombre de deux, opposés l'un à l'autre et placés chacun sur un côté de ladite deuxième ligne de transport (3) en contact avec lesdites deuxièmes barres de bois (31).

12. Encolleuse (1) selon la revendication 11) **caractérisée en ce que** chacun desdits ensembles de centrage (50, 50') comporte une tige de centrage (51, 51') située sur le côté de la machine et placée en contact avec les bords desdites deuxièmes barres de bois (31), chacune des tiges de centrage (51, 51') étant soutenue par une paire d'ensembles de déplacement avant (52, 52') et arrière y relatifs (53, 53'), aptes à la déplacer transversalement tout en la maintenant parallèle à l'axe longitudinal (Y) de la machine.

13. Encolleuse (1) selon la revendication 12) **caractérisée en ce que** chacun des ensembles de déplacement (52, 52'; 53, 53') comporte une vis-mère (54, 54'; 55, 55') dans laquelle une vis y relative (57, 57'; 58, 58') est couplée qui comporte une extrémité fixée au châssis de la machine.

14. Encolleuse (1 ) selon la revendication 13) **caractérisée en ce que** lesdites vis (57, 58; 57', 58') appartenant à chacun des ensembles de centrage sont mécaniquement reliées entre elles par une barre filetée (56, 56') soutenue aux extrémités par la vis-mère y relative (54, 55; 54', 55').

15. Encolleuse (1) selon la revendication 12) ou 13) **caractérisée en ce que** la vis (57, 57') d'au moins un ensemble de déplacement (52, 52') de chacun des ensembles de centrage (50, 50') comporte un volant de manoeuvre (63, 63').

16. Encolleuse (1) selon la revendication 1) **caractérisée en ce que** ladite station d'accouplement (4) comporte:
- un sélectionneur (22) coopérant avec lesdites premières barres de bois (21), apte à ne permettre leur accouplement aux barres de bois sous-jacentes (31) que quand lesdites deuxièmes barres de bois (31) se trouvent au-dessous de chacune des premières barres de bois (21);
- des moyens d'actionnement et de commande dudit sélectionneur (22);
- un cylindre de pression (26) accouplant lesdites premières barres de bois (21) aux deuxièmes barres de bois sous-jacentes (31), ledit cylindre de pression (26) étant doté d'un mouvement de rotation apte à introduire la planche (500) ainsi obtenue dans ladite station de pressage (5).

17. Encolleuse (1) selon la revendication 1) **caractérisée en ce que** ladite station de pressage (5) comporte une pluralité de rouleaux de pression (27) aptes à maintenir lesdites barres de bois (21, 31) couplées et adhérentes entre elles.

18. Encolleuse (1) selon la revendication 3) ou 4) **caractérisée en ce que** dans chacune des paires desdits rouleaux d'entraînement (11, 17) un desdits rouleaux (12, 18) est un rouleau crénelé apte à imprimer des rainures sur la surface de la barre de bois y relative (21, 31).

19. Encolleuse (1) selon la revendication 8) **caractérisée en ce que** lesdits moyens d'extraction comportent une lame (72) située à hauteur du fond de chacun desdits conteneurs (7) et apte à prélever chacune desdites premières barres de bois (21) une après l'autre dudit conteneur quand elle est déplacée horizontalement (71) par des actionneurs.

20. Encolleuse (1) selon la revendication 3) **caractérisée en ce que** ledit toboggan (10) est doté d'une paire de bandes transporteuses (221, 321) juxtaposées l'une à l'autre et appartenant à la structure dudit toboggan (10), chacune desdites premières barres de bois (21) étant maintenue adhérente à la bande transporteuse y relative (221, 321) par une lame d'appui fixe (222, 322) reliée audit corps dudit toboggan (10) au moyen d'une barre de soutien (100) soutenue par une bride (110).
